# EUROPEAN PATENT APPLICATION

(11) **EP 3 336 346 A1**
(43) Date of publication of application: **20.06.2018**
(21) Application number: 17189003.1
(22) Date of filing: 01.09.2017
(51) Int. Cl.: F03B 17/04

(54) **BUOYANT ROTATION DEVICE**

(30) Priority: 16.12.2016 TW 105141694
(71) Applicant: Yu Ding Enterprise Co., Ltd., Taichung City (TW)
(72) Inventor: Chen, Chung-Min, Taichung City (TW)
(74) Representative: RGTH

(57) **Abstract**

A buoyant rotation device has a casing (10), a rotating cylinder (20), and multiple floating elements (30). The casing (10) has a body (11) and two connecting boards (12). The rotating cylinder (20) is mounted in the casing (10) and has a part extending out of the body (11), an inner tank (21) with a holding shaft (211), an outer tank (22) mounted around the inner tank (21) to form an annular space, multiple dividing panels (23), and two side panels (24). The outer tank (22) has multiple main inlet holes (221) formed through the outer tank (22) and communicating with the annular space. The dividing panels (23) are deposited in the annular space at spaced intervals to form multiple separate spaces (25) not communicating with each other. Each floating element (30) is deposited in one of the multiple separate spaces (25) of the rotating cylinder (20).

## Description

### Field of the Invention

The present invention relates to a buoyant rotation device, and more particularly to a buoyant rotation device that may have a simplified structure, may be rotated by buoyant force, and may conform to environmental protection.

### Description of Related Art

With the progress of science and technology, energy consumption and the mankind's reliance on energy both increase over time. During the process of consuming energy, waste or harmful gases are generated to pollute and harm the environment. With high environmental awareness, development of alternative energy sources is an important target of governmental policy on science and technology, such as solar energy, biomass, wind power or hydroelectric power, and so on. Among these, the hydroelectric power mostly uses the height difference created by liquid flowing from a top to a bottom or by ups and downs of waves, and this may convert the potential difference of the liquid into kinetic energy for use.

The conventional hydroelectric power technology may provide a power generation effect, but most of the equipment used for power generation has a certain volume and the structure is complex. Furthermore, equipment for the conventional hydroelectric power technology must be installed in specific places such as reservoirs, mountains or seaside that can only provide an energy-converting effect by the height difference, and this may limit the practicality and convenience of hydroelectric power.

To overcome the shortcomings, the present invention provides a buoyant rotation device to mitigate or obviate the aforementioned problems.

The main objective of the present invention is to provide a buoyant rotation device that may have a simplified structure, may be rotated by buoyant force, and may conform to environmental protection.

The buoyant rotation device in accordance with the present invention has a casing, a rotating cylinder, and multiple floating elements. The casing has a body with an opening and two connecting boards. The rotating cylinder is rotatably mounted in the casing, a part of the rotating cylinder extends out of the body, and the rotating cylinder has an inner tank, an outer tank, multiple dividing panels, and two side panels. The inner tank has a holding shaft. The outer tank is mounted around the inner tank to form an annular space, and has multiple main inlet holes formed through the outer tank and communicating with the annular space. The dividing panels are deposited in the annular space at spaced intervals between the inner tank and the outer tank to form multiple separate spaces that do not communicate with each other. Each one of the multiple floating elements is respectively deposited in one of the multiple separate spaces of the rotating cylinder.

Other objectives, advantages and novel features of the invention will become more apparent from the following detailed description when taken in conjunction with the accompanying drawings.

### In the drawings

- Fig. 1: is a perspective view of a buoyant rotation device in accordance with the present invention;
- Fig. 2: is an exploded perspective view of the buoyant rotation device in Fig. 1;
- Fig. 3: is a side view in partial section of the buoyant rotation device in Fig. 1;
- Fig. 4: is an operational perspective view of the buoyant rotation device in Fig. 1, showing the buoyant rotation device deposited on a container; and
- Figs. 5 to 7: are operational side views of the buoyant rotation device in Fig. 5.

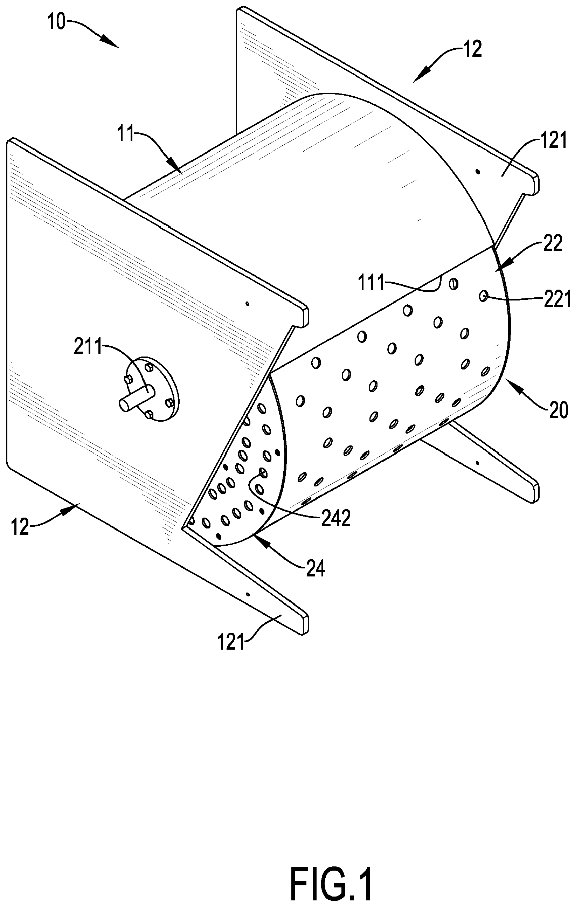

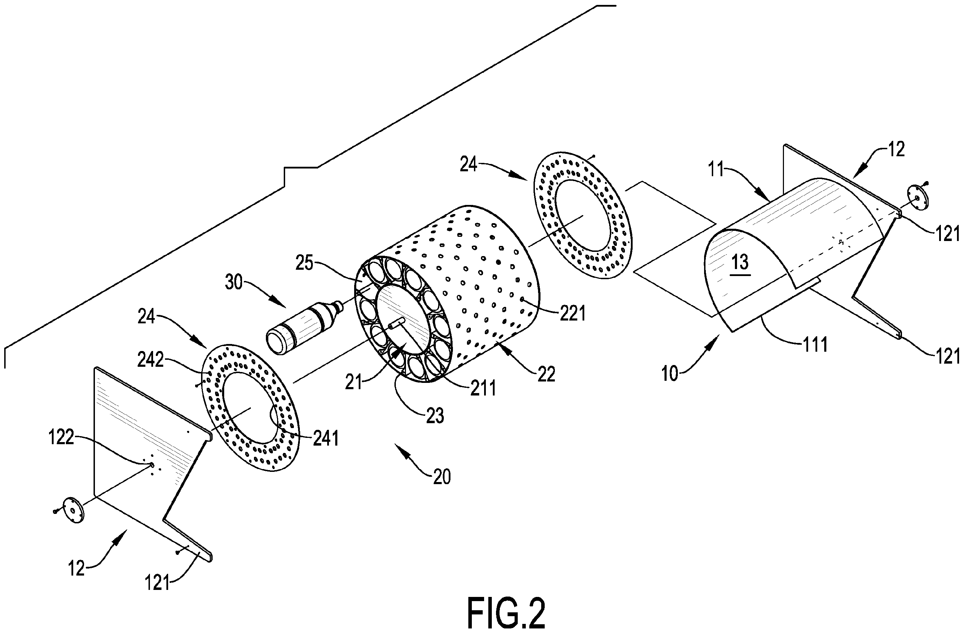

With reference to Figs. 1 to 3, a buoyant rotation device in accordance with the present invention has a casing 10, a rotating cylinder 20, and multiple floating elements 30.

The casing 10 has a body 11 and two connecting boards 12. The body 11 is an arcuated C-shaped panel and has an opening 111 formed on a side of the body 11.

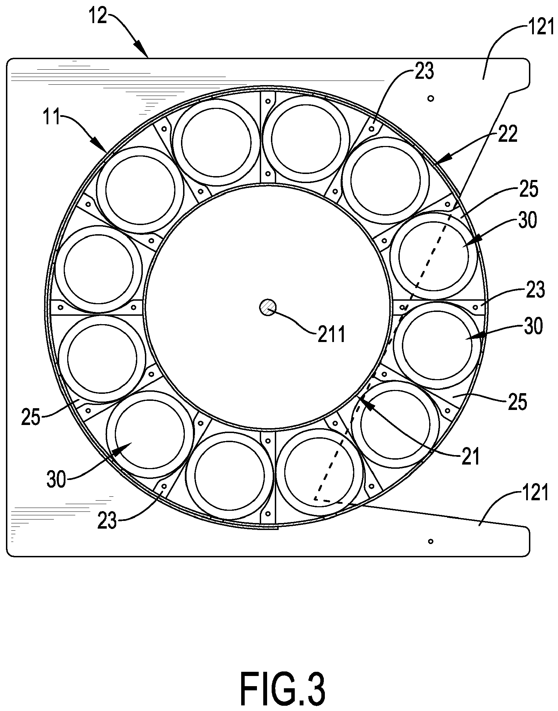

Furthermore, with further reference to Fig. 3, an angle of the opening 111 of the body 11 is 120 degrees between 2 o'clock and 6 o'clock, and this enables the opening 111 to tilt down. The two connecting boards 12 are respectively connected to two opposite side edges of the body 11 beside the opening 111 to form a chamber 13 of the casing 10 to communicate with the opening 111 between the body 11 and the two connecting boards 12. Additionally, each one of the two connecting boards 12 has a connecting arm 121 deposited on an outer side of the connecting board 12 adjacent to the opening 111 of the body 11, and the casing 10 may be connected to a container or a box by the connecting arms 121 of the two connecting boards 12. In addition, each one of the two connecting boards 12 has a through hole 122 formed through the connecting board 12 and communicating with the chamber 13 of the body 10.

The rotating cylinder 20 is rotatably mounted in the chamber 13 of the casing 10, and the rotating cylinder 20 is mounted in the body 11 of the casing 10 before the two connecting boards 12 are connected to the body 11, and this enables the rotating cylinder 20 to deposit between the two connecting boards 12, and a part of the rotating cylinder 20 extends out of the body 11 via the opening 111 of the body 11. The rotating cylinder 20 has an inner tank 21, an outer tank 22, multiple dividing panels 23, and two side panels 24. The inner tank 21 is hollow, and has two opposite sides and a holding shaft 211. The holding shaft 211 is axially deposited in the inner tank 21, and has two free ends respectively extending through the two opposite sides of the inner tank 21 and respectively connected to and extending out of the two through holes 122 of the two connecting boards 12.

The outer tank 22 is deposited around the inner tank 21 and has an axis aligning with an axis of the inner tank 21 to form an annular space between the inner tank 21 and the outer tank 22. The outer tank 22 has an external surface and multiple main inlet holes 221. The multiple main inlet holes 221 are formed through the external surface of the outer tank 22 at spaced intervals and communicate with the annular space between the inner tank 21 and the outer tank 22. The multiple dividing panels 23 are axially deposited in the annular space at spaced intervals between the inner tank 21 and the outer tank 22, and are securely connected to the inner tank 21 and the outer tank 22 to divide the annular space into multiple separate spaces 25 that do not communicate with each other. Each one of the multiple dividing panels 23 has two outer sides respectively extending to the two opposite sides of the inner tank 21.

The two side panels 24 are securely connected to the multiple dividing panels 23 to close the annular space (i.e. the multiple separate spaces 25) between the inner tank 21 and the outer tank 22. Furthermore, each one of the two side panels 24 is connected to the outer sides of the multiple dividing panels 23 that extend to a same one of the two opposite sides of the inner tank 21 adjacent to the side panel 24. Then, each one of the multiple separate spaces 25 is deposited between two adjacent dividing panels 23, an external surface of the inner tank 21, an internal surface of the outer tank 22, and the two side panels 24. A part of each one of the two side panels 24 extends out of the body 11 via the opening 111 of the body 11. Furthermore, each one of the two side panels 24 has a center, a receiving hole 241, and multiple auxiliary inlet holes 242. The receiving hole 241 is formed through the center of the side panel 24 and is disposed around one of the two opposite sides of the inner tank 21. The multiple auxiliary inlet holes 242 are formed through the side panel 24 at spaced intervals, and each one of the multiple auxiliary inlet holes 242 communicates with one of the multiple separate spaces 25.

The multiple floating elements 30 are deposited in the rotating cylinder 20, are respectively mounted in the multiple separate spaces 25 of the rotating cylinder 20, and each one of the multiple floating elements 30 stores a gas that has a specific gravity less than the specific gravity of water. Additionally, each one of the multiple floating elements 30 may be a plastic bottle or any member capable of storing gas and can be placed in one of the multiple separate spaces 25.

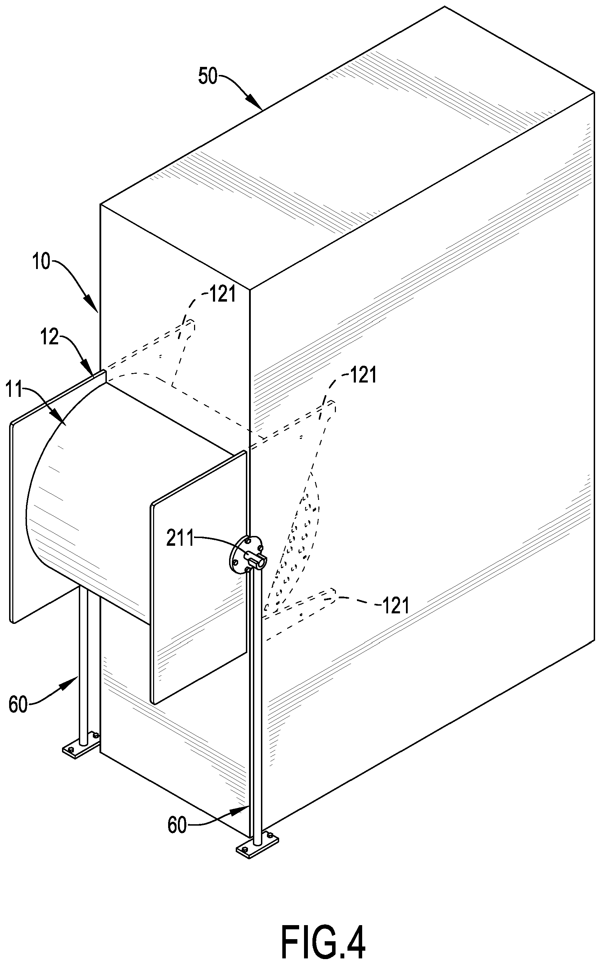

With reference to Fig. 4, when the buoyant rotation device of the present invention is in use, the connecting arms 121 of the two connecting boards 12 of the casing 10 are inserted into a container 50 and are securely connected to the container 50 by bolts to connect the connecting arms 121 of the two connecting boards 12 respectively with two inner sides of the container 50. Then, the opening 111 of the body 11 is deposited in the container 50, and the container 50 is filled with liquid such as water. The two free ends of the holding shaft 211 that extend out of the two connecting boards 12 are respectively connected to two supporting rods 60 to provide a supporting effect to hold the buoyant rotation device between the container 50 and the two supporting rods 60.

One of the two free ends of the holding shaft 211 is connected to a generator or its mechanical component to thereby provide a kinetic energy for rotation, but it is not limited thereto in the present invention.

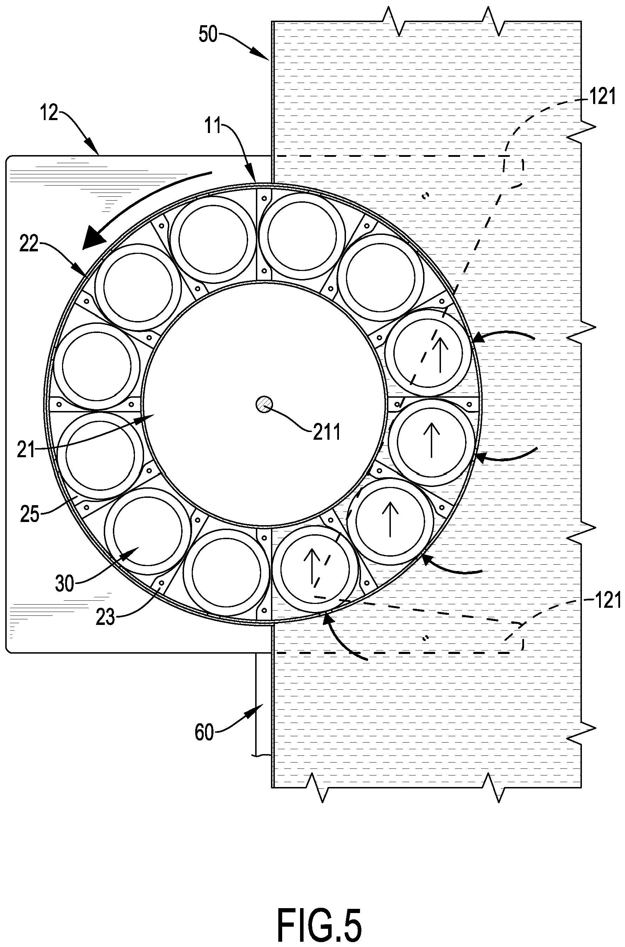

With further reference to Figs. 1 and 5, a part of the rotating cylinder 20 is deposited in the container 50 via the opening 111 of the body 11, and the liquid in the container 50 may flow into part of the multiple separate spaces 25 (i.e. the separate spaces 25 corresponding to the part of the outer tank 22 deposited in the container 50) between the inner tank 21 and the outer tank 22 via part of the multiple main inlet holes 221 of the outer tank 22. Furthermore, when the part of the rotating cylinder 20 is deposited in the container 50, a part of each one of the two side panels 24 is deposited in the container 50 via the opening 111 of the body 11. Then, the liquid in the container 50 may flow into the corresponding separate spaces 25 via part of the multiple auxiliary inlet holes 242 of the two side panels 24. In the present invention, there are twelve floating elements 30 deposited in the rotating cylinder 20, with every four floating elements 30 classified as a set, respectively a first set, a second set, and a third set.

When the liquid flows into part of the multiple separate spaces 25, the liquid may generate a buoyant force to each one of the floating elements 30 (the four floating elements 30 of the first set) deposited in the corresponding separate spaces 25. In the corresponding separate spaces 25 into which the liquid flows, the buoyant forces sustained by the floating elements 30 deposited in a lower position are larger than the buoyant forces sustained by the floating elements 30 deposited in an upper position. That is, the buoyant forces are increased from a top to a bottom between the corresponding separate spaces 25 gradually. Consequently, the floating elements 30 that sustain the buoyant forces of the liquid may drive the rotating cylinder 20 to rotate relative to the casing 10 and the container 50 in a counterclockwise direction as shown in Fig. 5.

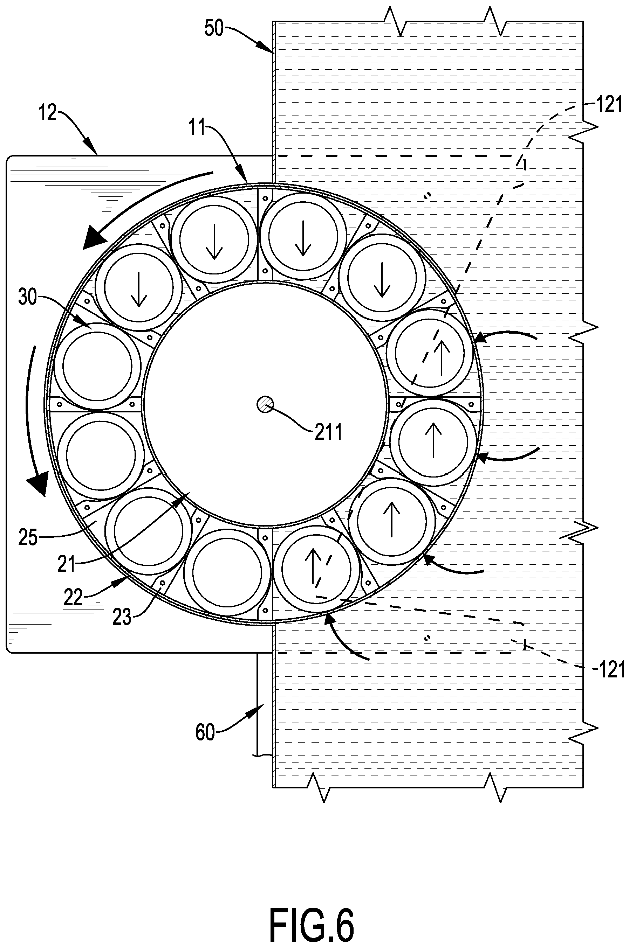

With reference to Fig. 6, when the liquid in the corresponding separate spaces 25 is moved into the casing 10 with the rotation of the corresponding floating elements 30 relative to the casing 10, another part of the multiple floating elements 30 (the four floating elements 30 of the second set) in the casing 10 may move into the container 50 with the inner tank 21 and the outer tank 22 via the opening 111 of the body 11. Then, the liquid in the container 50 may flow into the separate spaces 25 that correspond to said another part of the multiple floating elements 30 (second set) via part of the main inlet holes 221 and the auxiliary inlet holes 242. The weight of the liquid that moves into the casing 10 by the buoyant forces (corresponding to the first set) may provide downward gravity forces to the buoyant rotation device. Additionally, said another part of the multiple floating elements 30 (the second set) that are moved into the container 50 sustain the buoyant forces of the liquid. Then, the rotating cylinder 20 is driven by the gravity forces and the buoyant forces of the liquid between the container 50 and the casing 10 to rotate continuously relative to the casing 10 and the container 50 in a counterclockwise direction as shown in Fig. 6.

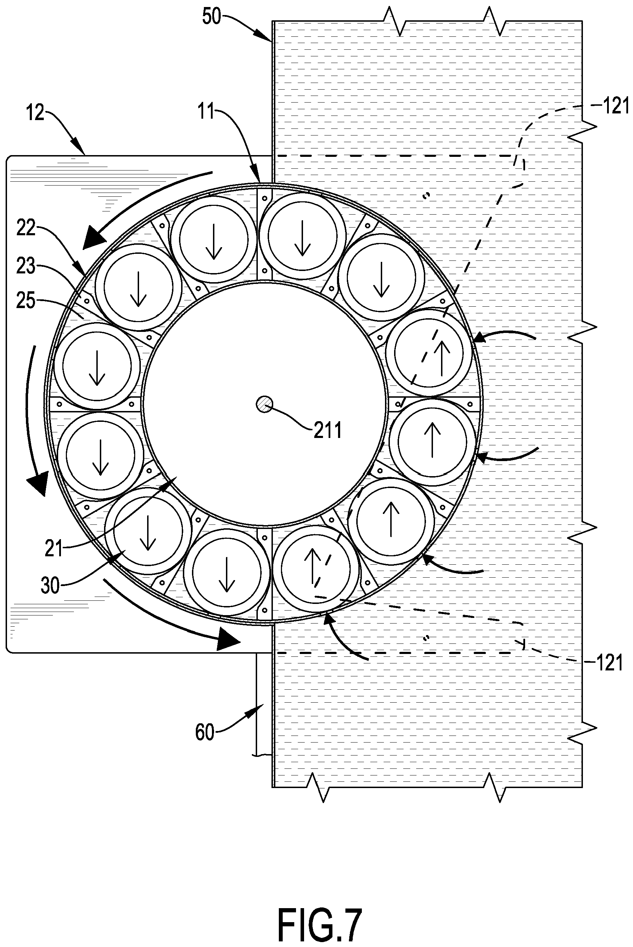

With reference to Fig. 7, when the rotating cylinder 20 is rotated relative to the casing 10 and the container 50 by the gravity forces and the buoyant forces of the liquid, the remaining part of the multiple floating elements 30 (the four floating elements of the third set) are moved into the container 50 to enable the liquid in the container 50 to flow into the separate spaces 25 of the rotating cylinder 20 that correspond to the remaining part of the multiple floating elements 30. Consequently, the rotating cylinder 20 is continuously driven to rotate relative to the container 50 and the casing 10 during the switching of the double forces of the buoyant forces and the gravity forces of the liquid, and this enables the holding shaft 211 to be continuously rotated without inputting other power or electric power. Then, the generator or mechanical equipment that is connected to the holding shaft 211 can generate electricity or be operated.

According to the above-mentioned features and structural relationship, when the buoyant rotation device of the present invention is in use, the opening 111 is deposited on the casing 10 to enable a part of the rotating cylinder 20 to extend out of the casing 10, the multiple separate spaces 25 are formed between the inner tank 21 and the outer tank 22 by the multiple dividing panels 23, and the multiple floating elements 30 are respectively deposited in the multiple separate spaces 25. When the buoyant rotation device is connected to a container 50, the liquid in the container 50 may flow into part of the multiple separate spaces via part of the main inlet holes 221 of the outer tank 22 and part of the auxiliary inlet holes 242 of the two side panels 24 to provide the buoyant forces to the corresponding floating elements 30.

During the rotation of the rotating cylinder 20 relative to the casing 10 and the container 50, the liquid that moves into the casing 10 by the rotation of the rotating cylinder 20 may provide the gravity forces to the rotating cylinder 20. Then, the rotating cylinder 20 is continuously driven to rotate relative to the container 50 and the casing 10 during the switching of the double forces of the buoyant forces and the gravity forces of the liquid, and this enables the holding shaft 211 to be continuously rotated without inputting other power or electric power. Then, the generator or mechanical equipment that is connected to the holding shaft 211 can generate electricity or be operated.

Therefore, the structure of the buoyant rotation device of the present invention is simplifier than the structure of the conventional hydroelectric power technology equipment, and the volume of the buoyant rotation device of the present invention is smaller than the conventional hydroelectric power technology equipment. In addition, the buoyant rotation device of the present invention is not limited to be installed in a specific place and only needs to connect with a container or a box that stores static liquid, and this will improve the practicality and convenience of hydroelectric power.

## Claims

1. A buoyant rotation device, and **characterized in that** the buoyant rotation device comprising:
a casing (10) having
a body (11) having an opening (111) formed on a side of the body (11) and tilting down; and
two connecting boards (12) respectively connected to two opposite side edges of the body (11) beside the opening (111) to form a chamber (13) of the casing (10) to communicate with the opening (111) between the body (11) and the two connecting boards (12);
a rotating cylinder (20) rotatably mounted in the chamber (13) of the casing (10), a part of the rotating cylinder (20) extending out of the body (11) via the opening (111) of the body (11), and the rotating cylinder (20) having an inner tank (21) having
two opposite sides; and
a holding shaft (211) axially deposited in the inner tank (21), and having two free ends respectively extending through the two opposite sides of the inner tank (21);
an outer tank (22) deposited around the inner tank (21) and having an axis aligning with an axis of the inner tank (21) to form an annular space between the inner tank (21) and the outer tank (22); and
multiple main inlet holes (221) formed through an external surface of the outer tank (22) at spaced intervals and communicating with the annular space between the inner tank (21) and the outer tank (22);
multiple dividing panels (23) axially deposited in the annular space at spaced intervals between the inner tank (21) and the outer tank (22), and securely connected to the inner tank (21) and the outer tank (22) to divide the annular space into multiple separate spaces (25) that do not communicate with each other; and
two side panels (24) securely connected to the multiple dividing panels (23) to close the annular space; and
multiple floating elements (30) deposited in the rotating cylinder (20), and each one of the multiple floating elements (30) respectively mounted in one of the multiple separate spaces (25) of the rotating cylinder (20).

2. The buoyant rotation device as claimed in claim 1, wherein
a part of each one of the two side panels (24) extends out of the body (11) via the opening (111) of the body (11); and
each one of the two side panels (24) has multiple auxiliary inlet holes (242) formed through the side panel (24) at spaced intervals; and
each one of the multiple auxiliary inlet holes (242) communicates with one of the multiple separate spaces (25) of the rotating cylinder (20).

3. The buoyant rotation device as claimed in claim 2, wherein
each one of the two connecting boards (12) has a connecting arm (121) deposited on an outer side of the connecting board (12) adjacent to the opening (111) of the body (11); and
the casing (10) is connected to a container or a box by the connecting arms (121) of the two connecting boards (12).

4. The buoyant rotation device as claimed in claim 3, wherein
each one of the two connecting boards (12) has a through hole (122) formed through the connecting board (12) and communicating with the chamber (13) of the body (11); and
the two free ends of the holding shaft (211) of the inner tank (21) respectively extend out of the two through holes (122) of the two connecting boards (12).

5. The buoyant rotation device as claimed in claim 4, wherein the rotating cylinder (20) is mounted in the body (11) of the casing (10) before the two connecting boards (12) are connected to the body (11) to deposit the rotating cylinder (20) between the two connecting boards (12).

6. The buoyant rotation device as claimed in any one of claims 1 to 5, wherein
each one of the two side panels (24) has a receiving hole (241) formed through a center of the side panel (24) and disposed around one of the two opposite sides of the inner tank (21).

7. The buoyant rotation device as claimed in claim 1, wherein
each one of the two connecting boards (12) has a connecting arm (121) deposited on an outer side of the connecting board (12) adjacent to the opening (111) of the body (11); and
the casing (10) is connected to a container or a box by the connecting arms (121) of the two connecting boards (12).

8. The buoyant rotation device as claimed in claim 1 or 2, wherein
each one of the two connecting boards (12) has a through hole (122) formed through the connecting board (12) and communicating with the chamber (13) of the body (11); and
the two free ends of the holding shaft (211) of the inner tank (21) respectively extend out of the two through holes (122) of the two connecting boards (12).

9. The buoyant rotation device as claimed in claim 1 or 2 or 3, wherein the rotating cylinder (20) is mounted in the body (11) of the casing (10) before the two connecting boards (12) are connected to the body (11) to deposit the rotating cylinder (20) between the two connecting boards (12).
